# EUROPEAN PATENT APPLICATION

(11) **EP 4 527 654 A1**
(43) Date of publication of application: **26.03.2025**
(21) Application number: 23199310.6
(22) Date of filing: 25.09.2023
(51) Int. Cl.: B60K 1/02

(54) **ELECTRIC DRIVE AXLE ARRANGEMENT AND VEHICLE COMPRISING THE ELECTRIC DRIVE AXLE ARRANGEMENT**

(71) Applicant: Scania CV AB, 151 87 Södertälje (SE)
(72) Inventor: KARLSSON, Stefan, 645 61 Stallarholmen (SE); KVALDÉN, Daniel, 647 92 Mariefred (SE); ARNELÖF, Per, 136 66 Vendelsö (SE); ALSING, Olle, 179 96 Svartsjö (SE); FORSBERG, Jörgen, 647 35 Mariefred (SE); INGESSON, Mattias, 117 56 Stockholm (SE); ENGSTRÖM, Jörgen, 147 71 Grödinge (SE); NAGHIBIAN, Mila, 113 57 Stockholm (SE)
(74) Representative: Scania CV AB

(57) **Abstract**

An electric drive axle arrangement (10) for a vehicle (1), the electric drive axle arrangement (10) comprising an axle structure (12) configured to support ground engaging wheels (2) of the vehicle (1). The electric drive axle arrangement (10) further comprises a drive unit (14, 14'), comprising a housing (15), and an articulated drive shaft (20) connected to an output shaft of the drive unit (14, 14'). The drive unit (14, 14') is, at a first portion (15a) of the housing (15), mounted to the axle structure (12) by a first suspension device (24) configured to allow a relative movement between the drive unit (14, 14') and the axle structure (12). The electric drive axle arrangement (10) further comprises a second suspension device (25) arranged at a second portion (15b) of the housing (15), said second suspension device (25) being configured for mounting the drive unit (14, 14') to a chassis structure (5) of the vehicle (1) so as to allow movement of the drive unit (14, 14') relative to said chassis structure (5).

## Description

### TECHNICAL FIELD

The present disclosure relates in general to an electric drive axle arrangement for a vehicle. The present disclosure further relates in general to a vehicle comprising the electric drive axle arrangement.

### BACKGROUND

In view of the ongoing electrification of vehicles, one of the technologies that is gaining focus today is that of electric drive axle solutions (also known as electric axles or eAxles). An electric drive axle may for example constitute the sole powertrain of a vehicle, or be one of a plurality of powertrains of a vehicle. An electric drive axle assembly comprises an electrical machine, serving as a propulsion unit, and a transmission assembly.

In a conventional central drive powertrain, for example a powertrain of a combustion engine driven heavy vehicle, the propulsion unit and the transmission are connected via a propeller shaft to the drive shaft and the associated drive wheels. In contrast, an electric drive axle is based on a powertrain configuration where an electrical machine, serving as a propulsion unit of the vehicle, and a transmission assembly are arranged essentially at the drive shaft. Thereby, there is no need for a propeller shaft for transferring propulsion power from the propulsion unit to the drive wheels of the vehicle. One of the advantages of an electric drive axle is that it typically occupies less space compared to a central drive powertrain and thereby leaves more space in the vehicle for accommodating other constituent components, for example batteries. An increased available space for batteries inherently means that more energy may be stored onboard the vehicle, may in turn increase the possible driving range of the vehicle. Furthermore, an electric drive axle provides a greater flexibility in vehicle configurations, for example as a result of not having to consider the arrangement of a propeller shaft.

Most previously known electric drive axle solutions are based on a configuration where a drive unit, comprising an electrical machine and a transmission assembly, is fixedly attached to an axle structure, for example a housing of a rear axle. One example of such a solution is described in WO 2023/287334 A1. Having the drive unit fixedly attached to the axle structure inherently means that the drive unit will follow with the suspension travel of said axle structure, which in turn means that there must be sufficient clearance to allow such a high relative movement between chassis and drive unit. Therefore, a very compact design of the drive unit is needed in order not to lose too much space onboard the vehicle. The need for a compact design in turn sets limitations as to the possible propulsion power and/or efficiency. Moreover, systems configured to supply various media to the drive unit must be able to cope with long movements between drive unit and connection points in the chassis, which in turn may cause fatigue of components of said systems. Furthermore, vibration levels in practically parallelogram suspension may create high acceleration loads on sensitive components, such as electrical machine, inverter and mechanical connections/joints.

Some manufacturers have developed solutions where the drive unit is fixedly mounted to the vehicle chassis and is combined with specific types of suspension systems, such as individual suspensions or de-dion suspensions. These solutions rely on the usage of articulated drive shafts. With such a chassis mounted drive unit, ground clearance at bump stop could be an issue since the chassis often need to be closer to ground and obstacles could therefore easier impact the drive unit. Chassis mounted drive units must also be designed to work with high drive shaft joint angles, which in turn typically requires usage of constant velocity joint devices (CV-joints). Also drive shaft bearing fatigue life length may be an issue in such solutions.

### SUMMARY

The object of the present invention is to provide an improved electric drive axle solution.

The object is achieved by the subject-matter of the appended independent claim(s).

The present disclosure provides an electric drive axle arrangement for a vehicle. The electric drive axle arrangement comprises an axle structure configured to support ground engaging wheels of a vehicle when the electric drive axle is comprised in said vehicle. The electric drive axle arrangement further comprises a drive unit, said drive unit comprising a housing, at least one electrical machine, and a transmission assembly. Moreover, the electric drive axle arrangement comprises an articulated drive shaft connected, optionally via a differential, to an output shaft of the drive unit. The drive unit is, at a first portion of the housing, mounted to the axle structure by a first suspension device configured to allow a relative movement between the drive unit and the axle structure. The electric drive axle arrangement further comprises a second suspension device arranged at a second portion of the housing. Said second suspension device is configured for, when the electric drive axle arrangement is comprised in said vehicle, mounting the drive unit to a chassis structure of the vehicle so as to allow movement of the drive unit relative to said chassis structure.

The herein described electric drive axle arrangement allows the drive unit to, in response to suspension travel of the axle structure, move relative to the chassis structure of a vehicle comprising the electric drive axle arrangement, but to a lower extent compared to traditional electric axle solutions where the drive unit is fixedly attached to the axle structure. More specifically, the drive unit will, at a portion/end thereof connected to the axle structure, substantially follow with the suspension travel of axle structure, i.e. a movement in a vertical direction of the vehicle. However, the drive unit will at an opposing portion/end thereof, where the most sensitive components of the drive unit (in particular the electrical machine(s)) are arranged within the drive unit, in contrast be subjected to a substantially horizontal movement in relation to the vehicle.

Thereby, the herein described electric drive axle arrangement *inter alia* has the advantage of reducing the acceleration levels for vibration sensitive components (such as the electrical machine and its associated inverter) resulting from suspension travel of the axle structure compared to e.g., traditional electric drive axles in parallelogram suspension. This is due to said sensitive components not having to following with the vertical movement of the axle structure but instead will be subjected to the above described substantially horizontal movement, which will also be considerably smaller in size than the vertical movement of the axle structure. The reduced acceleration, to which the vibration sensitive components will be subjected, in turn improves robustness.

Moreover, the herein described electric drive axle arrangement enables lower unsprung mass and parallelogram movement on axle structure, and may thereby improve driver comfort. It also allows for improved integration possibilities for systems configured to provide various media to the drive unit compared to solutions where the drive unit is fixedly attached to the axle structure. The herein described electric drive axle arrangement also allows for incorporating a power take-off connected to the electrical machine of the drive unit, which would be very difficult, or even impossible, when the drive unit is fixedly attached to the axle structure.

The herein described electric drive axle arrangement also allows for standardizing the space for the drive unit onboard the vehicle, either in front of, or behind, the axle structure. Also, there is a lower need for adaptation of chassis structures of vehicle depending on desired positioning of the electrical machine. Therefore, the electric drive axle arrangement also allows for e.g., improved possibilities for standardization of space onboard for energy storage device(s). Moreover, the electric drive axle arrangement can be combined with various types of suspension systems for the axles structure. These factors all effect the possibility for modularization, which is a strategy that may be used to improve the ability of a vehicle manufacturer to efficiently provide end users, i.e. customers, with a high variety of offerings customized to their needs.

Furthermore, the herein described electric drive axle arrangement leads to lower drive shaft joint angles compared to previously known solutions where the drive unit is fixedly mounted to the chassis, which in turn improves robustness. The herein described electric drive axle arrangement also enables more space onboard the vehicle for axle and suspension parts compared to previously known de-dion suspension solutions. Moreover, better ground clearance may be enabled for not requiring the chassis to be as close to the ground compared to these previous solutions.

The articulated drive shaft may be configured to adapt its length in response to changes in relative distance between the connection of the articulated drive shaft to the output shaft of the drive unit and opposing longitudinal ends of the axle structure. Thereby, it may be avoided that changes in the said relative distance must be addressed at wheel hub assemblies and/or at the connection between the drive unit and the articulated drive shaft, which would necessitate a more complicated design of the electric drive axle arrangement.

The articulated drive shaft may comprise a first drive shaft half and a second drive shaft half. Each of first and second drive shaft halves may be connected to a first coupling device at a first longitudinal end of the drive shaft half and connected to a second coupling device at a second longitudinal end of the drive shaft half. Each of said first and second coupling devices are configured to transmit torque at varying angles of intersection between constituent components coupled by said coupling device.

Moreover, each of the first drive shaft half and the second drive shaft half may comprise a sliding joint configured to allow changes in longitudinal extension of the respective drive shaft half. Thereby, an easy solution allowing the articulated drive shaft to adapt its length in response to changes in relative distance between the connection of the articulated drive shaft to the output shaft of the drive unit and opposing longitudinal ends of the axle structure is achieved.

The first coupling device and/or the second coupling device may be selected from the group consisting of a universal joint device and a constant-velocity joint device. Preferably, the first coupling device and/or the second coupling device constitutes a universal joint device since this may allow for improved robustness and lower cost. The selection of a universal joint device to serve as coupling devices is enabled by the herein described electric drive axle arrangement resulting in lower joint angles of the articulated drive shaft compared to previously known chassis mounted solutions.

The first longitudinal end of each of the first and second drive shaft halves may be arranged on a drive unit side of the respective drive shaft half. If so, the first coupling device connected to the first drive shaft half and the first coupling device connected to the second drive shaft half are arranged such that they are arranged at substantially equal distances from a longitudinal center axis of the vehicle when the electric drive axle arrangement is comprised in said vehicle. Thereby, the resulting joint angles of the articulated drive shaft during suspension travel of the axle structure may be further reduced.

The second suspension device may for example comprise an elongated link member provided with a bearing, such as a bushing or a ball joint, at each respective longitudinal end. Said elongated link member *inter alia* has the advantage of, when the electric drive axle arrangement is arranged in the vehicle, allowing the drive unit to be arranged below the chassis structure of the vehicle while ensuring that drive unit is allowed to move in relation to the chassis structure.

The first suspension device may for example comprise (or consist of) a ball joint or a bushing. Thereby, is it ensured that the portion of the drive unit facing towards the axle structure will substantially follow with the suspension travel of the axle structure but that a small relative movement between the drive unit relative to the axle structure is possible. This in turn reduces the joint angles of the articulated drive shaft.

Moreover, the transmission assembly may comprise a multispeed transmission unit. Multispeed transmission units *inter alia* have the advantage, compared to single speed transmission units, of providing a higher flexibility to meet the demands of different driving conditions as well as improving energy efficiency of the powertrain.

The present disclosure also relates to a vehicle comprising the above described electric drive axle arrangement. The vehicle further comprises a chassis structure comprising a plurality of frame members. The vehicle also comprises an axle suspension system configured to suspend the axle structure of the electric drive axle arrangement relative to the chassis structure. The drive unit of the electric drive axle arrangement is mounted to one of the plurality of frame members via the second suspension device.

The same advantages as described above in relation to the electric drive axle arrangement is achieved by means of said vehicle.

The electric drive axle arrangement may be arranged in the vehicle such that the second portion of the housing of the drive unit is arranged below a lower horizontal plane of chassis structure. This allows an efficient use of space onboard the vehicle.

Moreover, the electric drive axle arrangement may be arranged in the vehicle such that a part of the electrical machine is arranged directly below at least one frame member of the plurality of frame members. Thereby, the size of the electrical machine, and hence the deliverable power, is not limited by the available space between frame members.

The plurality of frame members of the chassis structure may comprise at least a first side beam and a second side beam. In such a case, the drive unit may be mounted to the first side beam via the second suspension device and mounted to the second side beam via a third suspension device, said third suspension device being configured to allow movement of the drive unit relative to the chassis structure. The third suspension device may be arranged at a third portion of the housing of the drive unit.

Furthermore, the above mentioned axle suspension system may for example be an air suspension system or a leaf suspension system.

The vehicle may be a pure electric vehicle, or a hybrid electric vehicle. The vehicle may be a heavy vehicle, but is not limited thereto. For example, the vehicle may be a truck, a bus, a trailer, a construction vehicle, a tractor, or even a car. The vehicle may be a vehicle configured to be operated, either partly or fully, by a driver. Such a driver may be present onboard the vehicle or be remote from the vehicle, for example at a remote control center or the like. Alternatively, the vehicle may be a fully autonomous vehicle.

### BRIEF DESCRIPTION OF DRAWINGS

- Fig. 1: illustrates a side view of an example of a vehicle,
- Fig. 2: schematically illustrates a top view of an exemplifying embodiment of the herein described electric drive axle arrangement,
- Fig. 3: schematically illustrates a top view of the exemplifying embodiment of Fig. 2, shown in relation to a chassis structure of a vehicle,
- Fig. 4: schematically illustrates the principle of arrangement of the electric drive axle arrangement of Figs. 2 and 3, when comprised in a vehicle, as seen from a lateral side view of the vehicle,
- Fig. 5: schematically illustrates a top view of a first exemplifying embodiment wherein two of the electric drive axle arrangement as shown in Figs. 2 and 3 are arranged in a vehicle, and
- Fig. 6: schematically illustrates a top view of a first exemplifying embodiment wherein two of the electric drive axle arrangement as shown in Figs. 2 and 3 are arranged in a vehicle.

### DETAILED DESCRIPTION

The invention will be described in more detail below with reference to exemplifying embodiments and the accompanying drawings. The invention is however not limited to the exemplifying embodiments discussed and/or shown in the drawings, but may be varied within the scope of the appended claims. Furthermore, the drawings shall not be considered drawn to scale as some features may be exaggerated in order to more clearly illustrate the invention or features thereof.

In the present disclosure, directional terms such as "horizontal", "vertical", "below", "top", or the like, shall be regarded as given in relation to a ground surface on which a vehicle comprising the herein described electric drive axle arrangement is present, unless explicitly described otherwise.

The electric drive axle arrangement according to the present disclosure comprises an axle structure configured to support ground engaging wheels of a vehicle when the electric drive axle is comprised in said vehicle. The axle structure may typically be configured to extend longitudinally in the transversal direction of the vehicle, when the electric drive axle arrangement is arranged in the vehicle. At each longitudinal end of the axle structure, a respective wheel hub assembly may be arranged, when the electric drive axle arrangement is arranged in the vehicle. Such wheel hub assemblies may, or may not, constitute a constituent component of the herein described electric drive axle arrangement.

The electric drive axle arrangement further comprises a drive unit, said drive unit comprising a housing, at least one electrical machine, and a transmission assembly. The transmission assembly may for example comprise at least one multispeed transmission unit, and optionally a final gear. The present disclosure is however not limited as to any particular configuration of the transmission assembly, and the transmission assembly may therefore alternatively for example comprise or consist of a single speed transmission unit.

Moreover, the electric drive axle arrangement comprises an articulated drive shaft as will be described in further detail below. The articulated drive shaft is connected, optionally via a differential, to an output shaft of the drive unit.

The drive unit is, at a first portion of the housing, mounted to the axle structure by a first suspension device configured to allow a relative movement between the drive unit and the axle structure. More specifically, the first suspension device is configured to pivotally mount the drive unit to the axle structure. The first suspension device may for example be a ball joint or a bushing, but is not limited thereto.

The electric drive axle arrangement further comprises a second suspension device arranged at a second portion of the housing. Said second suspension device is configured for, when the electric drive axle arrangement is comprised in said vehicle, mounting the drive unit to a chassis structure of the vehicle in such a way that movement of the drive unit relative to said chassis structure is allowed. More specifically, the second suspension device is configured to allow at least a horizontal movement, in a direction parallel to a longitudinal center axis of the vehicle, of the second portion of the housing of the drive unit when the electric drive axle arrangement is arranged in said vehicle. This in turn means that the whole part of the drive unit opposing the end connected to the articulated drive shaft is allowed to move in a horizontal direction that is parallel to the longitudinal center axis of the vehicle.

The second suspension device may for example comprise an elongated link member provided with a bearing at each respective end. Such a bearing may for example be a bushing or a ball joint, but is not limited thereto. Thereby, a swinging motion of the second suspension device about its center of connection to a chassis structure of a vehicle comprising the electric drive axle arrangement may allow the relevant portion of the drive unit to move in a horizontal direction. Alternatively, the second suspension device may in the end of the elongated link member connected to the chassis structure be configured to slide in a e.g. a recess of the chassis structure to thereby enable the intended horizontal movement of the drive unit relative to the chassis structure.

The electric drive axle arrangement may further comprise a third suspension device, said third suspension device being configured for, when the electric drive axle arrangement is comprised in the vehicle, mounting the drive unit to a chassis structure of the vehicle in such a way that movement of the drive unit relative to said chassis structure is allowed. The third suspension device may suitably have the same configuration as the second suspension device, but is arranged at a third portion of the housing. The second portion (at which the second suspension device is arranged) and the third portion (at which the third suspension device is arranged) may, when the electric drive axle is arranged in the vehicle, be arranged on opposite sides of a longitudinal axis of the vehicle and along a common axis which is parallel to a transversal axis of the vehicle. Described differently, the second portion of the housing of the drive unit may face towards a first lateral side of the vehicle whereas the third portion of the housing of the drive unit may face towards the opposing second lateral side of the vehicle. Presence of both the second and third suspension devices reduces the risk for twisting of the drive unit relative to the chassis during suspension travel of the axle structure, and also allows for reducing the weight of the drive unit that the second suspension device needs to support by evening out said weight on both the second and third suspension devices.

When the herein described electric drive axle arrangement is arranged in a vehicle and the axle structure is suspended by an axle suspension system configured therefore, the suspension travel of the axle structure will inherently affect the orientation of the drive unit relative to the chassis structure of the vehicle. More specifically, the part of the drive unit mounted to the axle structure will essentially follow the suspension travel of the axle structure, but with changes in angle between the housing of the drive unit and the axle structure, as a result of the first suspension device. This in turn results in a horizontal movement of the part of the drive unit opposing the part connected to the axle structure. This also results in changes in relative distance between the connection of the articulated drive shaft to the rotational center of the above described wheel hub assemblies, due to the movements of the drive unit, that need to be addressed. This may be difficult so achieve at the wheel hub assemblies. Therefore, the articulated drive shaft may suitably be configured to adapt its length in response to changes in relative distance between the connection of the articulated drive shaft to the output shaft of the drive unit and opposing longitudinal ends of the axle structure. This may for example be achieved by the articulated drive shaft comprising sliding joints configured to allow changes in longitudinal extension of the articulated drive shaft.

The articulated drive shaft may comprise a first drive shaft half and a second drive shaft half, each configured to be arranged on opposite sides of the connection to the drive unit. Each of the first and second drive shaft halves may be connected to a first coupling device at a first longitudinal end of the drive shaft half. Furthermore, each of the first and second drive shaft halves may be connected to a second coupling device at a second longitudinal end of the drive shaft half. Each of said first and second coupling devices is configured to transmit torque at varying angles of intersection between constituent components coupled by said coupling device, one of said constituent components being the corresponding drive shaft half. Moreover, each of the first and second coupling devices may be selected from the group consisting of a universal joint device and a constant-velocity joint device, but is not limited thereto. Furthermore, each of the first drive shaft half and the second drive shaft half may comprise the above described sliding joint configured to allow changes in longitudinal extension of the respective drive shaft half.

In order to improve the robustness of the articulated drive shaft, the various joint angles in the articulated drive shaft should preferably be kept as small as possible. This may be achieved by distributing the joint angles evenly, which in turn means that the first and second drive shaft halves should have essentially the same length for a given suspension position of the axle structure. Described differently, the coupling devices arranged at the longitudinal ends of the drive shaft halves that face the drive unit should suitably be arranged at substantially equal distances from a longitudinal center axis of the vehicle when the electric drive axle arrangement is arranged in said vehicle.

The present disclosure also relates to a vehicle comprising the above described electric drive axle arrangement. The vehicle comprises a chassis structure comprising a plurality of frame members. The plurality of frame members may typically comprise at least a first side beam and a second side beam arranged on opposite sides of a longitudinal center axis of the vehicle. The plurality of frame members may also comprise connecting beams configured to connect the first side beam and the second side beam. The drive unit of the electric drive axle arrangement is mounted to one of the frame members of the chassis structure via the second suspension device. The vehicle also comprises an axle suspension system configured to suspend the axle structure of the electric drive axle arrangement relative to the chassis structure. The axle suspension system may be any previously known axle suspension system. For example, the axle suspension system may be an air suspension system, a leaf suspension system, an electronic suspension system, a hydropneumatic suspension system, or a hydraulic suspension system.

The electric drive axle arrangement may be arranged in the vehicle such that the second portion of the housing of the drive unit is arranged below a lower horizontal plane of chassis structure. More specifically, the part of the drive unit opposing the end of the drive unit connected to the articulated drive shaft may be arranged below said lower horizontal plane of the chassis structure. This allows an efficient use of space onboard the vehicle. In fact, the electric drive axle arrangement may be arranged in the vehicle such that a part of the electrical machine is arranged directly below at least one frame member of the plurality of frame members. Directly below is herein intended to mean a relative position along a (common) axis which is parallel to a vertical axis of the vehicle. Said at least one frame member may be a side beam. In case the drive unit comprises two electrical machines, each electrical machine may be arranged directly below a respective frame member. Thereby, the size of the electrical machine(s), and hence the deliverable power, is not limited to the available space between frame members and essentially the whole width of the vehicle may be used for accommodating the drive unit.

The drive unit of the electric drive axle arrangement may suitably be mounted to a first side beam via the second suspension device, and mounted to a second side beam via a third suspension device. Like the second suspension device, the third suspension device may be configured to allow movement of the drive unit relative to the chassis structure. The third suspension device may be arranged at a third portion of the housing of the drive unit. The second and third portions of the housing are arranged on opposite sides of the vehicle as seen in a transversal direction of the vehicle.

It should be noted that the herein describe vehicle may also, if desired, comprise more than one of the herein described electric drive axle arrangement. For example, the vehicle may comprise two of the herein described electric drive axle arrangement arranged so as to mirror each other as seen along the longitudinal center axis of the vehicle. In such a case, the respective drive units of the electric drive axle arrangements would be present between the axle structures of the respective electric drive axle arrangements. For example, the herein described electric drive axle arrangement may be comprised in a tandem drive axle assembly. Alternatively, at least two electric drive axle arrangements may be arranged in the vehicle so as to have the same orientation of their drive unit relative to their axle structure as seen along the longitudinal axis of the vehicle.

The vehicle may be a pure electric vehicle, but is not limited thereto. Moreover, the vehicle may consist of a single vehicle unit or constitute a vehicle combination comprising at least two vehicle units which are linked together when travelling, i.e. comprising a tractor vehicle and at least one trailing vehicle. Examples of a vehicle consisting of a single vehicle unit includes a car, a rigid truck, a tractor truck, a bus, a construction vehicle, a tractor, or a powered trailer, but are not limited thereto. Examples of vehicle combinations include a semi-trailer truck, a rigid truck pulling a semitrailer using a dolly, or a vehicle train comprising a rigid truck and one or more trailers, but is not limited thereto. It should here be noted that, in case of a vehicle combination, the herein described electric drive axle arrangement may be comprised in either one of the vehicle units, or each vehicle unit may comprise at least one of the herein described electric drive axle arrangement.

Furthermore, the vehicle may be a vehicle configured to a driven fully or in part by a driver. Such a driver may be present onboard the vehicle or be remote from the vehicle, such as at a control center or the like. Alternatively, the vehicle may be a fully autonomous vehicle.

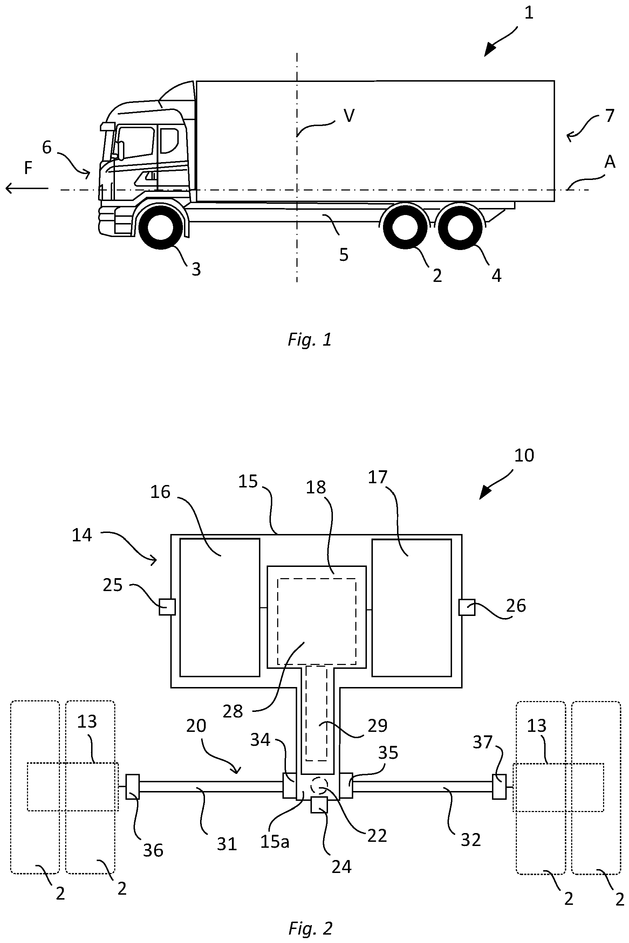

Figure 1 illustrates a side view of an example of a vehicle 1, here illustrated as a truck. The vehicle 1 may comprise the herein described electric drive axle arrangement. It should here be noted that the vehicle 1 may also comprise more than one of the herein described electric drive axle arrangement.

The vehicle 1 has a longitudinal center axis A. The longitudinal center axis A of the vehicle 1 is parallel to a forward moving direction as well as parallel to a reverse moving direction of the vehicle 1. The forward moving direction of the vehicle 1 is in the figure illustrated by the arrow F. Moreover, the vehicle 1 also has a vertical axis V which is perpendicular to the longitudinal center axis A. In case the vehicle is present on a flat ground surface, the vertical axis V is substantially perpendicular to said flat ground surface whereas the longitudinal center axis A is substantially parallel to the flat ground surface. The vehicle 1 further has a transverse axis (not shown) perpendicular to both the longitudinal center axis A and the vertical axis V. The vehicle 1 comprises a front 6 and a rear 7, between which lateral sides of the vehicle extend.

The vehicle 1 comprises a plurality of ground engaging wheels, including drive wheels 2 and front wheels 3. The front wheels 3 are typically non-driven wheels, but may also constitute drive wheels, if desired. The vehicle may further comprise tag axle wheels 4. Furthermore, the vehicle 1 comprises a chassis structure 5. Such a chassis structure typically comprises a plurality of frame members attached to each other.

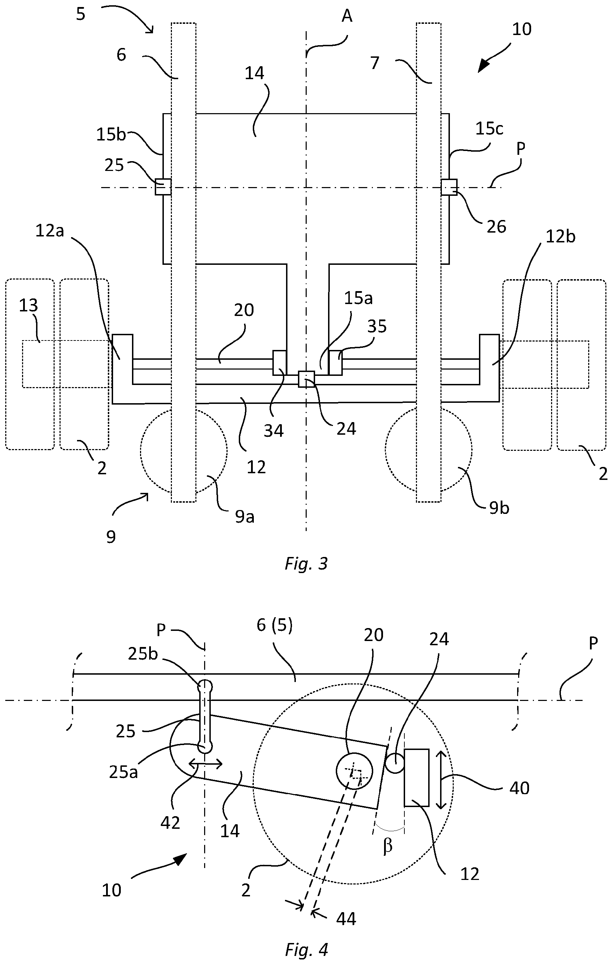

Each of Figure 2 and Figure 3 schematically illustrates a top view of an exemplifying embodiment of the herein described electric drive axle arrangement. A top view is here intended to mean a top view in relation to the orientation of the electric drive axle arrangement when arranged in a vehicle, such as the vehicle 1 shown in Figure 1. In the following, the electric drive axle arrangement 10 according to the exemplifying embodiment will be explained with reference to both Figure 2 and Figure 3. Figure 2 illustrates some of the details of the electric drive axle arrangement in more detail, but with the axle structure omitted. The axle structure of the electric drive axle arrangement is however shown in Figure 3, whereas details with regard to the drive unit has been omitted. In Figures 2 and 3, features that are not part of the electric drive axle arrangement as such are shown with dotted lines, whereas optional features of the exemplifying embodiment of the electric drive axle arrangement are shown with dashed lines.

As shown in Figure 3, the electric drive axle arrangement 10 comprises an axle structure 12. The axle structure 12 is configured to support ground engaging drive wheels 2 of a vehicle when the electric drive axle arrangement 10 is comprised in said vehicle. More specifically, the axle structure 12 may, at each longitudinal end 12a, 12b thereof be configured to support a wheel hub assembly 13 to which at least one drive wheel 2 may be mounted. The wheel hub assemblies 13 may, or may not, be regarded as comprised in the electric drive axle arrangement and are therefore illustrated as optional in the figures. If desired, a hub reduction transmission unit (not shown) may be arranged at each one of the wheel hub assemblies. Such hub reduction transmission units may be regarded as comprised in the electric drive axle arrangement, if present.

When the electric drive axle arrangement 10 is arranged in a vehicle, the axle structure is suspended relative to the chassis structure 5 of the vehicle by means of an axle suspension system 9 configured therefore, in the figure schematically represented merely by a pair of air bellows 9a, 9b for ease of illustration. The axle suspension system 9 may for example be an air suspension system or a leaf suspension system, but is not limited thereto as previously mentioned. The axle suspension system is not considered to constitute a part of the herein described electric drive axle arrangement 10. It should however be noted that the electric drive axle arrangement 10 and the axle suspension system 9 may, for practical reasons, often be integrated into a common arrangement before being installed in a vehicle.

The electric drive axle arrangement 10 further comprises a drive unit 14. The drive unit 14 may comprise a first electrical machine 16 and a second electrical machine 17 as shown in Figure 2. The first and second electrical machines 16, 17 may each be configured to act as a motor for the purpose of providing propulsion torque to drive wheels 2 of the vehicle, as well as act as generator for the purpose of providing a braking torque to the drive wheels 2. It should here be noted that although two electrical machines are illustrated in Figure 2, the drive unit may comprise only one electrical machine or more than two electrical machines, if desired.

The drive unit 14 further comprises a transmission assembly 18 connected to the first and second electrical machines 16, 17. The transmission assembly 18 may comprise one or more transmission units. For example, the transmission assembly may comprise a multispeed transmission unit 28 and optionally a final gear 29. Alternatively, or additionally, the transmission assembly may comprise a single speed transmission unit. Thus, the drive unit 14 of the electric drive axle arrangement 10 is not limited as regards any particular configuration of the transmission assembly 18.

The electrical machines 16, 17 as well as the transmission assembly 18 are arranged inside a housing 15 of the drive unit 14. As evident to a person skilled in the art, such a housing may comprise of a plurality of housing units, such as one or more electrical machine housings and one or more transmission assembly housings, that together form the housing 15 of the drive unit 14.

The electric drive axle arrangement 10 further comprises an articulated drive shaft 20. The articulated drive shaft 20 may be connected to an output shaft of the transmission assembly 18 via a differential 22. Alternatively, the articulated drive shaft 20 may be directly connected to an output shaft of the transmission assembly 18. The output shaft of the transmission assembly 18 forms an output shaft of the drive unit 14.

The articulated drive shaft 20 may comprise a first drive shaft half 31 and a second drive shaft half 32. The first drive shaft half 31 is at a first longitudinal end connected to a first coupling device 34, and at a second longitudinal end connected to a second coupling device 36. Similarly, the second drive shaft half 32, is at a first longitudinal end connected to a first coupling device 35, and at a second longitudinal end connected to a second coupling device 37. The first longitudinal end of each of the first and second drive shaft halves 31, 32 is arranged on a drive unit side of the respective drive shaft half whereas the second longitudinal end of each of the first and second drive shaft halves 31, 32 is arranged on a wheel hub assembly side. Each of the first and second coupling devices 34, 35, 36, 37, are configured to transmit torque at varying angles of intersection between constituent components coupled by said coupling device, i.e. between one of the drive shaft halves 31, 32 and a constituent component coupled thereto by the said coupling device. The coupling devices 34, 35, 36, 37 are constituent components of the articulated drive shaft 20. Moreover, the first coupling device 34 connected to the first drive shaft half 31 and the first coupling device 35 connected to the second drive shaft half 32 may be arranged to be at substantially equal distances from a longitudinal center axis A of the vehicle, when the electric drive axle arrangement is comprised in said vehicle. Each of the first and second coupling devices 34, 35, 36, 37 may for example be a universal joint device or a constant-velocity joint device.

The articulated drive shaft 20 may be configured to adapt its length in response to changes in relative distance between the connection of the articulated drive shaft 20 to the output shaft of the drive unit 14 and opposing longitudinal ends 12a, 12b of the axle structure 12 (see Figure 3). Thereby, it may be avoided that changes in the above mentioned relative distance must be addressed at the wheel hub assemblies 13 and/or at the connection between the drive unit and the articulated drive shaft 20, which would necessitate a more complicated design of the electric drive axle arrangement 10. The articulated drive shaft 20 may for example be configured to adapt its length by each of the first and second drive shaft haves 31, 32 comprising a sliding joint configured allow changes in longitudinal extension of the respective drive shaft half.

At a first portion 15a of the housing 15, the drive unit 14 is mounted to the axle structure 12 by a first suspension device 24. The first portion 15a of the housing 15 may be arranged in the vicinity of the output end of the transmission assembly 18 of the drive unit 14. The first suspension device 24 is configured to cause the first portion 15a of the housing of the drive unit to essentially follow suspension travel of the axle structure 12 while still allowing a (small) relative movement between the drive unit 14 and the axle structure 12. The first suspension device 24 may for example be a ball joint or a bushing. It should here be noted that although only one first suspension device 24 is illustrated in the figure, the drive unit 14 may alternatively be mounted by more than one first suspension device to the axle structure as long as a relative movement between the drive unit 14 and the axle structure 12 is possible.

The electric drive axle arrangement 10 further comprises a second suspension device 25 arranged at a second portion 15b of the housing 15. The second suspension device 25 is configured for mounting the drive unit 14 to a chassis structure 5 of the vehicle so as to allow movement of the drive unit 14 relative to the chassis structure 5. The electric drive axle arrangement 10 according to the exemplifying embodiment also comprises a third suspension device 26 arranged at a third portion 15c of the housing 15. Like the second suspension device 25, the third suspension device 26 is configured for mounting the drive unit 14 to a chassis structure 5 of the vehicle in a manner that allows movement of the drive unit 14 relative to the chassis structure 5. It should here be noted that the second portion 15b of the housing 15 may be in the vicinity of the first electrical machine 16, whereas the third portion 15c of the housing 15 may be in the vicinity of the second electrical machine 17. In Figure 3, the chassis structure 5 is shown to comprise a first side beam 6 and a second side beam 7 arranged on opposite sides of a longitudinal center axis A of the vehicle in which the electric drive axle arrangement 10 is arranged. The second suspension device 25 may thus be configured for mounting the drive unit 14 to the first side beam 6, whereas the third suspension device 26 may be configured for mounting the drive unit 14 to the second side beam 7 of the chassis structure 5.

Figure 4 schematically illustrates the principle of arrangement of the electric drive axle arrangement 10 shown in Figures 2 and 3, when comprised in a vehicle, as seen from a lateral side view of the vehicle. The vehicle may for example be the vehicle 1 shown in Figure 1.

The chassis structure 5 of the vehicle is in the figure represented by side beam 6. As shown in figure, the drive unit 14 of the electric drive axle arrangement may be arranged below a lower horizontal plane (P) of the chassis structure 5. Thereby, the width of the drive unit 14, i.e. its extension in a transversal direction of the vehicle, is not limited to the distance between frame members of the chassis structure 5. This means that essentially the whole width of the vehicle may be utilized for accommodating the drive unit 14. This may in turn for example enable larger electrical machine(s) to be used, and thereby more propulsion power to the vehicle.

The axle structure 12 is typically suspended by axle suspension system (not shown in Figure 4) relative to the chassis structure 5. The suspension travel of the axle structure 12, which is in a vertical direction relative to the vehicle comprising the electric drive axle arrangement 10, is in the figure illustrated by double arrow 40. As previously mentioned, the drive unit 14 is, at a first portion of its housing, mounted to the axle structure 12 by a first suspension device 24. The first suspension device 24 will cause the part of the drive unit connected thereto to move with the suspension travel of the axle structure 12, illustrated by double arrow 40, but with changes in angle β between the axle structure 12 and the drive unit 14. Thus, there will be a small relative movement between the drive unit 14 and the axle structure 12.

The drive unit 14 of the electric drive axle arrangement 10 is mounted to the side beam 6 of the chassis 5 by the second suspension device 25 such that a relative movement of the drive unit 14 relative to the chassis is allowed. The movement of the drive unit 14 at the part/end connected to the axle structure by the first suspension device 24 will cause a primarily horizontal movement, illustrated by double arrow 42, at the opposing end of the drive unit, which is enabled by the second suspension device 25 (and the third suspension device 26 shown in Figure 2 and 3). As shown in the figure, the second suspension device 25 may comprise an elongated link member, which at each respective longitudinal end comprises a bearing 25a, 25b (such as a bushing or a ball joint) connecting the elongated to the drive unit 14 and the side beam 6 of the chassis structure 5, respectively.

The suspension points of the second suspension device 25 and the third suspension device 26, respectively, relative to the chassis structure 5 may be considered to be arranged in a common plane P (also illustrated in Figure 3). Said plane P extends vertically relative to the vehicle and perpendicular to the longitudinal center axis A of the vehicle. In Figure 4, the suspension point of second suspension device 25 relative to the chassis structure 5 corresponds to the center of bearing 25b. The movement, relative to the chassis structure 5, of the part of the drive unit 14 opposing the part connected to the axle structure 12 will be limited as a result of the second and third suspension devices 25, 26 as already described above. This means that accelerations of the portion of the drive unit 14 opposing the portion facing the axle structure relative to the plane P are dramatically reduced relative to the accelerations of the portion of the drive unit 14 facing the axle structure 12, which will move with the larger axle structure movement. It should here again be noted that vibration sensitive components, in particular the electrical machine 16, 17, are arranged in the portion of the drive unit 14 which is subjected to the lower accelerations (compare with Figure 2). This means that said components will be subjected to lower acceleration levels compared to for example if the whole drive unit would follow with the suspension travel of the axle structure 12 as is the case in conventional solutions where the drive unit is fixedly attached to the axle structure.

As shown in Figure 4, the articulated drive shaft 20 may be installed such that there is an offset 44 between the longitudinal ends of each drive shaft half, which in turn results in the joint angles at the coupling devices (not shown). These joint angles will inherently vary as a result of the movement of the drive unit 14 caused by suspension travel of the axle structure 12. More specifically, the movements of the drive unit 14 will inherently result in the connection points thereof to the respective drive shaft halves of the articulated drive shaft. Described differently, the coupling devices 34, 35 (see Figures 2 and 3) facing towards the drive unit 14 will move both in a vertical and in a horizontal direction seen in relation to vehicle at its chassis structure. However, the coupling devices 36 and 37 will follow the suspension travel of the axle structure 12. This means that the relative distance between the connection of the articulated drive shaft 20 to the drive unit 14 and opposing longitudinal ends of axle structure 12 will be subject to changes during suspension travel of the axle structure 12.

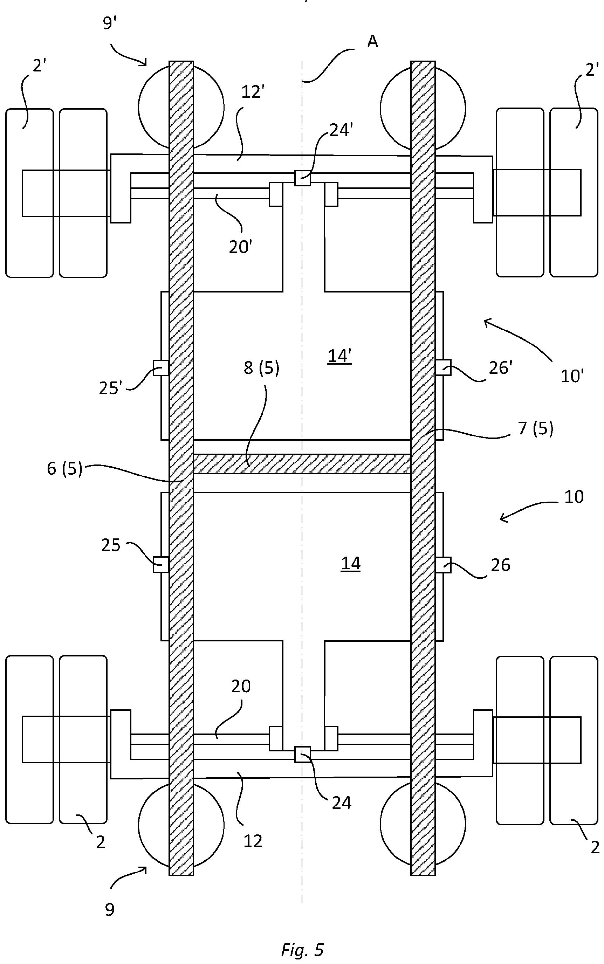

Figure 5 schematically illustrates a top view of a first exemplifying embodiment wherein two of the electric drive axle arrangement, as shown in Figures 2 and 3, are arranged in a vehicle. The vehicle is in the figure represented by the chassis structure 5. The chassis structure comprises a plurality of frame members including a first side beam 6, a second side beam 7, an at least one transversal side beam 8 extending between the first and second side beams 6, 7. The first and second side beams 6, 7 are arranged on opposite sides of the longitudinal center axis A of the vehicle. The vehicle further comprises a first set of drive wheels 2 and a second set of drive wheels 2'. As shown in the figure, a first electric drive axle arrangement 10 and a second electric drive axle arrangement 10' are arranged so as to mirror each other along a plane transversal to the longitudinal center axis A of the vehicle. The first and second drive axle arrangements 10, 10', may for example be comprised in a tandem drive axle assembly, but is not limited thereto.

The first electric drive axle arrangement 10 comprises the axle structure 12 configured to support ground engaging drive wheels 2. It further comprises the drive unit 14 and the articulated shaft 20. The second electric drive axle arrangement 10' comprises an axle structure 12' configured to support ground engaging wheels 2', the drive unit 14' and the articulated shaft 20'.

The first drive axle assembly 10 is mounted to the first side beam 6 by the second suspension device 25, and to the second side beam 7 by the third suspension device 26 as already described above in relation to Figures 3 and 4. Similarly, the second drive axle assembly 10' is mounted to the first side beam 6 by the second suspension device 25', and to the second side beam 7 by the third suspension device 26'. Each of the second and third suspension devices 25, 26, 25', 26' are configured to allow movement of the drive unit relative to the chassis structure 5, said movement being primarily in a horizontal direction in parallel with the longitudinal center axis A of the vehicle. Within each of the electric drive axle arrangements 10, 10', the drive unit 14, 14' is mounted to the corresponding axle structure 12, 12' by a first suspension device 24, 24'. Each of the first suspension devices 24, 24' are configured to allow a relative movement between the drive unit 14, 14' and the axle structure 12, 12' within the respective electric drive axle arrangement 10, 10'.

The vehicle further comprises a first drive axle suspension system 9 configured to suspend the axle structure 12 of the electric drive axle arrangement 10 relative to the chassis structure of the vehicle, and a second drive axle suspension system 9' configured to suspend the axle structure 12' of the electric drive axle arrangement 10' relative to the chassis structure of the vehicle. Each of the drive axle suspension systems 9, 9' may be an air suspension system.

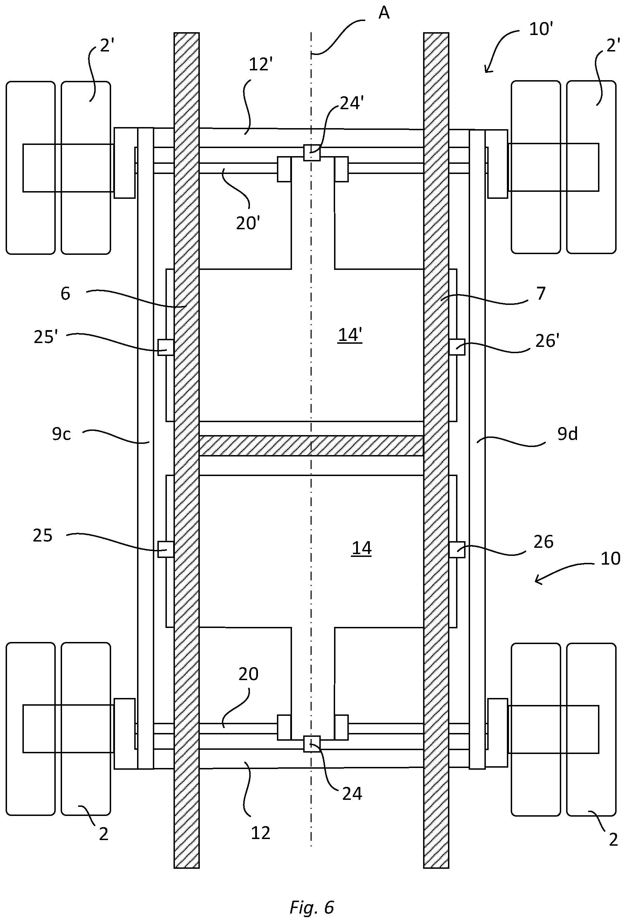

Figure 6 schematically illustrates a top view of a second exemplifying embodiment wherein two of the electric drive axle the electric drive axle arrangement as shown in Figures 2 and 3 are arranged in a vehicle. The second exemplifying embodiment corresponds to the first exemplifying embodiment shown in Figure 5, except that it does not comprise any air suspension systems of the axle structures 12, 12', but a leaf suspension system. The leaf suspension system comprises a first leaf spring 9c and a second leaf spring 9d, each extending between the axle structures 12, 12'.

## Claims

1. An electric drive axle arrangement (10, 10') for a vehicle (1), the electric drive axle arrangement (10, 10') comprising:
an axle structure (12, 12') configured to support ground engaging wheels (2, 2') of a vehicle (1) when the electric drive axle arrangement (10, 10') is comprised in said vehicle (1),
a drive unit (14, 14') comprising a housing (15), at least one electrical machine (16, 17), and a transmission assembly (18), and
an articulated drive shaft (20, 20') connected, optionally via a differential (22), to an output shaft of the drive unit (14, 14'),
wherein the drive unit (14, 14') is, at a first portion (15a) of the housing (15), mounted to the axle structure (12, 12') by a first suspension device (24, 24') configured to allow a relative movement between the drive unit (14, 14') and the axle structure (12, 12'), and
the electric drive axle arrangement (10, 10') further comprising a second suspension device (25, 25') arranged at a second portion (15b) of the housing (15), said second suspension device (25, 25') being configured for, when the electric drive axle arrangement (10, 10') is comprised in said vehicle (1), mounting the drive unit (14, 14') to a chassis structure (5) of the vehicle (1) so as to allow movement of the drive unit (14, 14') relative to said chassis structure (5).

2. The electric drive axle arrangement (10, 10') according to claim 1, wherein the articulated drive shaft (20, 20') is configured to adapt its length in response to changes in relative distance between the connection of the articulated drive shaft (20, 20') to the output shaft of the drive unit (14, 14') and opposing longitudinal ends (12a, 12b) of the axle structure (12, 12').

3. The electric drive axle arrangement (10, 10') according to any one of claims 1 or 2, wherein the articulated drive shaft (20, 20') comprises a first drive shaft half (31) and a second drive shaft half (32),
each of the first and second drive shaft halves (31, 32) being connected to a first coupling device (34, 35) at a first longitudinal end of the drive shaft half (31, 32) and connected to a second coupling device (36, 37) at a second longitudinal end of the drive shaft half (31, 32),
each of the first and second coupling devices (34, 35, 36, 37) being configured to transmit torque at varying angles of intersection between constituent components coupled by said coupling device (34, 35, 36, 37).

4. The electric drive axle arrangement (10, 10') according to claim 3, wherein each of the first drive shaft half (31) and the second drive shaft half (32) comprises a sliding joint configured to allow changes in longitudinal extension of the respective drive shaft half (31, 32).

5. The electric drive axle arrangement (10, 10') according to any one of claims 3 or 4, wherein the first coupling device (34, 35) and/or the second coupling device (36, 37) is/are selected from the group consisting of a universal joint device and a constant-velocity joint device.

6. The electric drive axle arrangement (10, 10') according to any one of claims 2 to 4, wherein
the first longitudinal end of each of the first and second drive shaft halves (31, 32) is arranged on a drive unit side of said drive shaft half (31, 32), and
wherein the first coupling device (34) connected to the first drive shaft half (31) and the first coupling device (35) connected to the second drive shaft half (32) are arranged such that, when the electric drive axle arrangement (10, 10') is comprised in said vehicle (1), they are arranged at substantially equal distances from a longitudinal center axis (A) of the vehicle (1).

7. The electric drive axle arrangement (10, 10') according to any one of the preceding claims, wherein the second suspension device (25, 25') comprises an elongated link member provided with a bearing (25a, 25b) at each respective longitudinal end.

8. The electric drive axle arrangement (10, 10') according to any one of the preceding claims, wherein the first suspension device (24, 24') comprises a ball joint or a bushing.

9. The electric drive axle arrangement (10, 10') according to any one of the preceding claims, wherein the transmission assembly (18) comprises a multispeed transmission unit (28).

10. A vehicle (1) having a longitudinal center axis (A), the vehicle (1) comprising:
the electric drive axle arrangement (10, 10') according to any one of the preceding claims,
a chassis structure (5) comprising a plurality of frame members (6, 7, 8), and
an axle suspension system (9) configured to suspend the axle structure (12, 12') of the electric drive axle arrangement (10, 10') relative to the chassis structure (5),
wherein the drive unit (14, 14') of the electric drive axle arrangement (10, 10') is mounted to one of the frame members (6, 7, 8) of the chassis structure (5) via the second suspension device (25, 25').

11. The vehicle (1) according to claim 10, wherein the electric drive axle arrangement (10, 10') is arranged in the vehicle (1) such that the second portion (15a) of the housing (15) of the drive unit (14, 14') is arranged below a lower horizontal plane (P) of chassis structure (5).

12. The vehicle (1) according to claim 11, wherein the electric drive axle arrangement (10, 10') is arranged in the vehicle (1) such that a part of the electrical machine (16, 17) of the drive unit (14, 14') is arranged directly below at least one frame member of the plurality of frame members (6, 7, 8).

13. The vehicle (1) according to any one of claims 10 to 12, wherein the plurality of frame members (6, 7, 8) comprises at least a first side beam (6) and a second side beam (7), and
wherein the drive unit (14, 14') is mounted to the first side beam (6) via the second suspension device (25, 25') and mounted to the second side beam (7) via a third suspension device (26, 26'),
said third suspension device (26, 26') being configured to allow movement of the drive unit (14, 14') relative to the chassis structure (5) and being arranged at a third portion (15c) of the housing of the drive unit.

14. The vehicle (1) according to any one of claims 9 to 13, wherein the axle suspension system (9) is an air suspension system or a leaf suspension system.
